Europäisches Patentamt

European Patent Office

Office européen des brevets

(11) Veröffentlichungsnummer: **0 319 549**
**B1**

(12) **EUROPÄISCHE PATENTSCHRIFT**

(45) Veröffentlichungstag der Patentschrift: **05.09.90**

(51) Int. Cl.⁵: **B 65 G 35/06**

(21) Anmeldenummer: **87906570.4**

(22) Anmeldetag: **28.09.87**

(86) Internationale Anmeldenummer:
**PCT/EP87/00551**

(87) Internationale Veröffentlichungsnummer:
**WO 88/02345 07.04.88 Gazette 88/08**

(54) FÖRDEREINRICHTUNG.

(30) Priorität: **03.10.86 DE 3633702**

(43) Veröffentlichungstag der Anmeldung:
**14.06.89 Patentblatt 89/24**

(45) Bekanntmachung des Hinweises auf die Patenterteilung:
**05.09.90 Patentblatt 90/36**

(84) Benannte Vertragsstaaten:
**AT BE CH DE FR GB IT LI SE**

(56) Entgegenhaltungen:
**DE-A-1 756 438**
**DE-A-1 811 986**
**FR-A-2 269 440**
**GB-A- 869 900**
**US-A-3 929 079**

(73) Patentinhaber: **Fahrion, Otmar**
**Iltisweg 31**
**D-7014 Kornwestheim (DE)**

(72) Erfinder: **Fahrion, Otmar**
**Iltisweg 31**
**D-7014 Kornwestheim (DE)**

(74) Vertreter: **Ostertag, Reinhard et al**
**Patentanwälte Dr. Ulrich Ostertag Dr. Reinhard Ostertag Eibenweg 10**
**D-7000 Stuttgart 70 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Courier Press, Leamington Spa, England.

## Beschreibung

Die Erfindung betrifft eine Fördereinrichtung für Paletten gemäß dem Oberbegriff des Anspruches 1.

Eine derartige Fördereinrichtung ist in der GB-A 869 900 gezeigt. Bei ihr kann bei bestimmten Abschnitten des Förderweges die Fördergeschwindigkeit der Paletten umgeschaltet werden. Hierzu sind zwei mit unterschiedlicher Geschwindigkeit angetriebene Kettenförderer vorgesehen, von denen sich der eine, der mit der Grundgeschwindigkeit läuft, über den gesamten Förderweg erstreckt, während der zweite, der mit höherer Geschwindigkeit läuft, nur in kurzen Beschleunigungsstrecken vorgesehen ist. Dieser zweite Förderer kann durch hydraulische Zylinder angehoben werden, so daß er dann die Paletten vom erster Förderer abhebt und mit seiner höheren Geschwindigkeit weiterbewegt.

Diese bekannte Fördereinrichtung ist mechanisch aufwendig und eignet sich nicht für flexiblen Einsatz an variablen Fertigungsstraßen, da die Stellen, an denen die Geschwindigkeitsänderung erfolgt, nicht mit geringem Aufwand umprogrammiert werden können.

Es sind ferner Fördereinrichtungen bekannt, die zwei parallel zueinander verlaufende Förderketten aufweisen, bei denen auf die einzelnen Kettenglieder bügelförmige Tragkappen derart aufgesetzt sind, daß ihre Oberseiten eine glatt durchgehende Förderfläche bilden. Auf diesen Förderflächen sitzen Füße der Paletten unter dem Palettengewicht auf und werden durch Reibschluß mitgenommen. Stößt die Palette gegen eir Hindernis, z.B. das Ende einer vor einer Arbeitsstation wartenden Palettenschlange, so können die Förderketten unter den Füßen der Paletten durchrutschen.

Da die an mit solchen Fördereinrichtungen versehenen Fertigungsstraßen aufgestellten Arbeitsstationen sehr kostspielige Bearbeitungsmaschinen enthalten, die Laufgeschwindigkeit der Endlosförderer aber der Bearbeitungszeit der Werkstücke in einer Station Rechnung tragen muß, wurde schon vorgeschlagen, die unrentablen Beschickungszeiten der Bearbeitungsstationen dadurch zu verkleinern, daß man die Paletten durch eine gesonderte Antriebseinrichtung rasch in die Arbeitsstationen hineinzieht und aus diesen herausschiebt. Derartige Hilfs-Fördereinrichtungen umfassen z.B. Malteserkreuzgetriebe oder ähnliche Schrittschaltgetriebe, wobei deren Abtriebsteil direkt an der Palette angreift. Bei den in der Praxis großen Palettenabmessungen haben entsprechende Schrittschaltgetriebe ihrerseits große Dimension; sie lassen sich daher in kleinen Bearbeitungsstationen oder dann, wenn die Paletten in Bodennähe gefördert werden, nur schwierig unterhalb der Förderebene anbringen. Die Wartung dieser schlecht zugänglichen Schrittschaltgetriebe ist entsprechend kompliziert; auch besteht in solchen Bearbeitungsstationen, in denen Metall zerspant wird, die Gefahr, daß Späne in das Schrittschaltgetriebe gelangen und dieses beschädigen.

Durch die vorliegende Erfindung soll eine Fördereinrichtung geschaffen werden, welche es erlaubt, Paletten mit gegenüber der Grund-Fördergeschwindigkeit stark erhöhter Geschwindigkeit in eine Bearbeitungsstation einzuziehen, wobei die Stellen des Förderweges, bei denen Geschwindigkeitsänderungen stattfinden sollen, auf einfache Weise umprogrammierbar sein sollen.

Diese Aufgabe ist erfindungsgemäß gelöst durch eine Fördereinrichtung gemäß Anspruch 1.

Bei der erfindungsgemäßen Fördereinrichtung laufen zumindest zwei Endlosförderer dauernd mit unterschiedlicher Geschwindigkeit. Diese Endlosförderer haben beide eine im wesentlichen geschlossene Förderfläche, sind also gegen Metallspäne unempfindlich. Auf diesen Förderflächen sitzen jeweils Aufsetzelemente der Paletten, wobei der Kraftschluß zwischen den Aufsetzelementen und den Förderflächen steuerbar ist. Auf diese Weise kann man eine betrachtete Palette wahlweise an einen schneller laufenden Endlosförderer oder einen langsamer laufenden Endlosförderer ankoppeln. Die bei Änderung der Ankopplung zu beschleunigenden bzw. abzubremsenden Massen ergeben sich nur aus der Palette und dem von dieser getragenen Werkstück, während bei Schrittschaltgetrieben zusätzliche Massen im Getriebe selbst beschleunigt und abgebremst werden müssen. Die erfindungsgemäße Fördereinrichtung läßt sich auch sehr nieder bauen, und im Bereich der Bearbeitungsstationen sind keine mechanisch aufwendigen und wartungsbedürftigen Teile vorhanden. Da die Fördereinrichtung auch keine rasch hin- und hergehenden Teile enthält, ist auch die Unfallgefahr erheblich vermindert. Schließlich läßt sich bei der erfindungsgemäßen Fördereinrichtung auch einfach das Verhältnis zwischen hoher und niederer Fördergeschwindigkeit abändern, indem man die Antriebe für die beiden Endlosförderer unterschiedlich schnell laufen läßt.

Vorteilhafte Weiterbildungen der Erfindung sind in Unteransprüchen angegeben.

Bei einer Fördereinrichtung gemäß Anspruch 2 hat man bei gelösten Bremsen eine besonders geringe Rest-Kraftübertragung zwischen den bewegten Förderflächen und einer Palette.

Mit der Weiterbildung der Erfindung gemäß Anspruch 3 wird erreicht, daß nur an denjenigen Stellen des Förderweges, an denen eine Änderung der Bremsstellung notwendig ist, entsprechende stationäre Betätigungsmittel vorgesehen zu werden brauchen.

Bei einer Fördereinrichtung gemäß Anspruch 4 schieben die mit ihren Stirnflächen auf den Förderflächen liegenden Räder der Aufsetzelemente etwa auf den Endlosförderern befindliche Späne weg. Wiederum hat man in der Ruhestellung eines Aufsetzelementes, in welcher das zugeordnete Rad nur mit einem kleinen Randbereich auf dem zugeordneten Endlosförderer (unter kleinem Schlupf) rollt, eine nur sehr geringe Kraftübertragung zwischen diesem Endlosförderer und der Palette, während die anderen Aufsetzelemente, bei denen die Räder mit ihrer vollen Stirnfläche auf

dem Endlosförderer aufruhen, eine hohe Kraftubertragung zwischen Endlosförderer und Palette gewährleistet ist.

Bei einer Fördereinrichtung gemäß Anspruch 6 schieben die Schuhe der Aufsetzelemente wiederum auf den Endlosförderern liegende Späne weg. Außerdem zeichnen sich die im Anspruch 6 angegebenen Aufsetzelemente durch mechanisch besonders einfachen und robusten Aufbau aus.

Mit der Weiterbildung der Erfindung gemäß Anspruch 7 wird erreicht, daß die Palette ohne Umsetzen auch auf einer Seitenförderstrecke laufen können, deren Endlosförderer unter einem Winkel von 90 Grad zu den Endlosförderern einer ersten Förderstrecke verlaufen, da das Verstellen der Aufsetzelemente für beide Förderrichtungen in gleicher Weise wirksam ist.

Auch die Weiterbildung der Erfindung gemäß Anspruch 9 ist im Hinblick auf möglichst gute Kraftübertragung im Arbeitszustand der Aufsetzelemente und möglichst geringe Restkraft in der Ruhestellung der Aufsetzelemente von Vorteil.

Mit der Weiterbildung der Erfindung gemäß Anspruch 10 wird einerseits eine nur sehr geringe Restkraftübertragung in der Ruhestellung der Aufsetzelemente und eine nur geringe Verstellkraft zum Umstellen der Aufsetzelemente zwischen Arbeits- und Ruhestellung gewährleistet.

Gemäß Anspruch 11 wird die mechanische Kraft, die zum Verstellen der Aufsetzelemente zwischen Arbeits- und Ruhestellung benötigt wird, mechanisch von der Bewegung der Endlosförderer abgegriffen. Die einzelnen Paletten brauchen somit keine Energiespeicher wie Batterien zu tragen, die wartungsintensiv wären.

Mit der Weiterbildung der Erfindung gemäß Anspruch 12 wird erreicht, daß das Ableiten der Stellkraft für die Aufsetzelemente auch beim Übergang von einer ersten geradlinigen Förderstrecke auf eine zweite, unter 90 Grad hierzu geneigte Förderstrecke erhalten bleibt.

Gemäß Anspruch 13 wird automatisch erkannt, ob die Palette in Richtung der Paletten-Hauptachse oder in Richtung der Paletten-Nebenachse bewegt wird. Automatisch werden jeweils die in momentaner Förderrichtung hintereinander liegenden der Aufsetzelemente zu einem gemeinsam gesteuerten Paar zusammengefaßt.

Bei einer Fördereinrichtung gemäß Anspruch 14 kann auch die elektrische Versorgungsspannung, welche zum Betreiben elektronischer Schaltkreise der Kraftfluß-Steuerung benötigt wird, von der Relativbewegung der beiden Endlosförderer gegeneinander abgeleitet werden. Dabei können zusätzlich kleine, wartungsfreie Akkumulatoen verwendet werden, die durch den Spannungsgenerator aufgeladen werden und sowohl zur Spannungsglättung als auch zum raschen Wiederingangsetzen der Steuerung nach einem vollständigen Stillstand der Endlosförderer dienen.

Mit der Weiterbildung der Erfindung gemäß Anspruch 16 wird erreicht, daß Paletten nicht mit großer Geschwindigkeit aufeinanderstoßen, vorzugsweise dann, wenn sie auf das Ende einer Warteschlange oder ein Hindernis stoßen, der Kraftschluß zu beiden Endlosförderern vollständig aufgehoben wird.

Mit der Weiterbildung der Erfindung gemäß Anspruch 17 ist es möglich, einzelne Paletten auch an solchen Stellen des Förderweges zu beschleunigen oder abzubremsen, die normalerweise mit Grundgeschwindigkeit durchlaufen werden. Auf diese Weise lassen sich störungsbedingte Unregelmäßigkeiten in der Palettenverteilung der Förderanlage rasch ohne apparative Maßnahme ausgehend von einem zentralen Steuerungsrechner auflösen.

Mit der Weiterbildung der Erfindung gemäß Anspruch 18 wird erreicht, daß der Kraftschluß zwischen den raschen Endlosförderern und den Paletten besonders gut ist, da hier die doppelte Kontaktfläche zur Verfügung steht. Zudem wird durch die symmetrische Kraftbeaufschlagung der Palette sichergestellt, daß auf die Palette keine Drehmomente bezüglich ihrer Hochachse ausgeübt werden, wenn eine Umsteuerung der Palettengeschwindigkeit herbeigeführt wird.

Die Weiterbildung der Erfindung gemäß Anspruch 19 ermöglicht es, mit Bearbeitungsstationen unmittelbar bis an den Rand einer Palette heranzurücken. Auch im Hinblick auf glattflächige äußere Begrenzungsflächen der bewegten Paletten ist diese Weiterbildung vorteilhaft.

Eine Fördereinrichtung gemäß Anspruch 22 ist besonders dann geeignet, wenn eine große Anzahl von Paletten auf einem Weg zu fördern ist, auf dem die Geschwindigkeit nur an wenigen Punkten geändert werden muß. Man hat so dann mechanisch besonders robuste und preisgünstige Paletten.

Mit der Weiterbildung gemäß Anspruch 24 wird erreicht, daß die Endlosförderer eine glatt durchgehende Oberfläche, auf der die Paletten mitgenommen werden, und glatt durchgehende Seitenflachen, die sich gut zur Führung an feststehenden Platten eignen, aufweisen.

Nachstehend wird die Erfindung anhand von Ausführungsbeispielen unter Bezugnahme auf die Zeichnung näher erläutert. In dieser zeigen:

Figur 1: eine schematische Aufsicht auf eine Palette und einen Ausschnitt aus zwei Kettenförderern, durch welche die Palette mit unterschiedlicher Geschwindigkeitbewegt werden kenn.

Figur 2: einen vertikalen Schnitt durch eines der Aufsetzelemente der in Figur 1 gezeigten Palette;

Figur 3: eine Aufsicht auf eine Ecke des Aufsetzelementes nach Figur 2.

Figur 4: eine schematische Aufsicht auf ein abgewandeltes Aufsetzelement zur Verwendung bei der Palette nach Figur 1;

Figur 5: ein vertikalen Schnitt durch ein weiterabgewandeltes Aufsetzelement.

Figur 6: eine ähnliche Ansicht wie Figur 5, in welcher jedoch ein weiter abgewandeltes Aufsetzelement gezeigt ist;

Figur 7: eine Aufsicht auf ein um eine vertikale Achse drehbares Rad, welches einen Teil eines weiter abgewandelten Aufsetzelementes darstellt;

Figur 8: eine ähnliche Darstellung wie Figur 1, in welcher jedoch zwei Paare von Kettenförderern zum Einstellen der unterschiedlichen Geschwindigkeiten der Palette vorgesehen sind;

Figur 9: eine Aufsicht auf eine abgewandelte Palette, die auf rechtwinklige Knickstellen aufweisenden Förderwegen bewegbar ist;

Figur 10: eine Aufsicht auf die Unterseite eines Schuhs der Aufsetzelemente der Palette nach Figur 9;

Figur 11: ein mechanisches und elektrisches Blockschaltbild der in Figur 9 gezeigten Palette;

Figur 12: eine Aufsicht ähnlich zu Figur 1 oder 8, wobei jedoch zur Einstellung zweier unterschiedlicher Fördergeschwindigkeiten der Palette drei Kettenförderer vorgesehen sind;

Figur 13: eine Aufsicht auf die Unterseite einer abgewandelten, in Winkelrichtung versetzbaren Palette;

Figur 14: eine Aufsicht auf die Unterseite eines Schuhs der Aufsetzelemente der Palette nach Figur 13;

Figur 15: einen transversalen Schnitt durch den Schuh nach Figur 14 längs der dortigen Schnittlinie XV—XV; und

Figur 16: eine Aufsicht auf einen Ausschnitt einer abgewandelten Paletten-Fördereinrichtung.

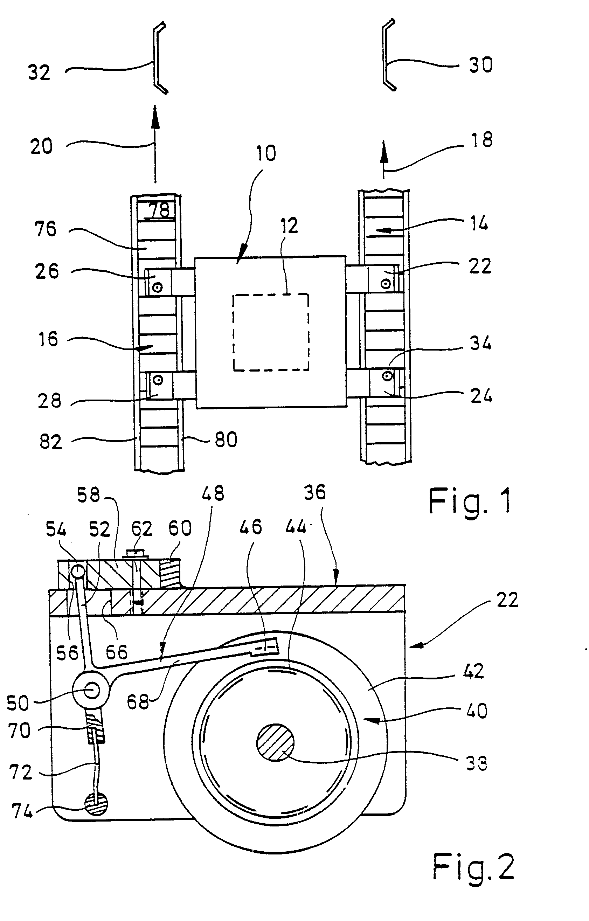

Figur 1 zeigt eine Palette 10, die ein gestrichelt auf ihr angedeutetes Werkstück 12 durch verschiedene nicht gezeigte Bearbeitungsstationen trägt. Zum Bewegen der Palette 10 ist ein erster Kettenförderer 14 sowie ein zweiter Kettenförderer 16 vorgesehen, wobei der Kettenförderer 16 schneller läuft als der Kettenförderer 14, wie durch die Länge von Pfeilen 18, 20 angedeutet.

Die Palette 10 hat auf ihrer rechten Seite zwei Aufsetzelemente 22, 24, auf ihrer linken Seite zwei Aufsetzelemente 26, 28. Die Aufsetzelemente 22 bis 28 übertragen zum einen das Gewicht von Palette 10 und Werkstück 12 auf die Kettenförderer 14 und 16 und stellen zugleich eine steuerbare Reibschluß-Mitnahmeverbindung zwischen der Palette 10 und jeweils einem der Kettenförderer 14 und 16 her. Die Steuerung des Reibschlusses zwischen Palette und Kettenförderern wird nachstehend noch genauer beschrieben. Grob gesprochen arbeitet diese Steuerung so, daß dann, wenn die Palette 10 mit geringer Geschwindigkeit bewegt werden soll, durch die Aufsetzelemente 22 und 24 ein Reibschluß zum Kettenförderer 14 hergestellt wird, während die Aufsetzelemente 26 und 28 den Reibschluß zum Kettenförderer 16 aufheben. Die Palette 10 wird dann mit dem Kettenförderer 14 mitbewegt, während sich der Kettenförderer 16 unter den Aufsetzelementen 26, 28 hindurchbewegen kann, momentan also nur vertikale Tragfunktion hat. Soll dagegen die Palette 10 rasch bewegt werden, wird der Reibschluß zwischen den Aufsetzelementen 26, 28 und dem Kettenförderer 16 hergestellt, während der Reibschluß zwischen den Aufsetzelementen 22, 24 und dem Kettenförderer 14 aufgehoben wird, so daß die Aufsetzelemente 22, 24 über den Kettenförderer 14 hinweglaufen können, der nun seinerseits nur noch Tragfunktion hat.

Die Steuerung der Herstellung und Aufhebung des Reibschlusses zwischen den verschiedenen Aufsetzelementen und den Kettenförderern erfolgt durch rahmenfeste Betätigungselemente, z.B. in Figur 1 gezeigte Nockenschienen 30 und 32, die mit Nockenfolgerollen 34 der einzelnen Aufsetzelemente 22, 24 zusammenarbeiten. Zur gleichzeitigen Betätigung der auf einer Seite der Palette 10 gelegenen Nockenfolgerollen 34 können die entsprechenden Nockenschienen 30, 32 und die Nockenfolgerollen 34 der Aufsetzelemente in unterschiedliche Ebenen gelegt sein, wobei die Nockenschienen 30, 32 um den Abstand hintereinander liegender Nockenfolgerollen 34 entfernt sind. Stattdessen kann man auch die Steuerglieder der verschiedenen Aufsetzelemente mechanisch koppeln, so daß nur eine einzige Nockenfolgerolle 34 notwendig ist.

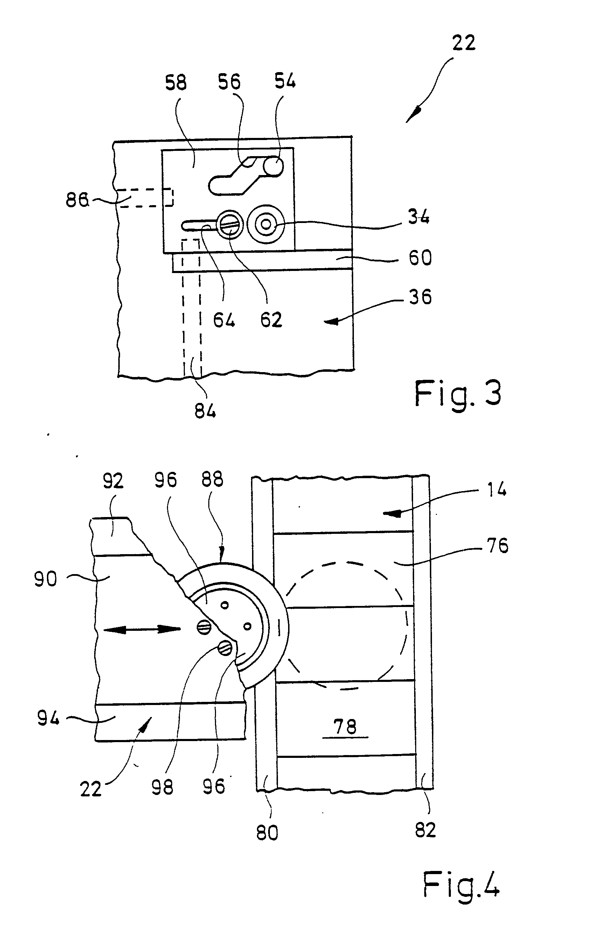

In den Figuren 2 und 3 ist ein erstes Ausführungsbeispiel für eines der Aufsetzelemente gezeigt.

Das Aufsetzelement hat einen bügelförmigen Rahmen 36, in dessen Schenkeln eine Achse 38 befestigt ist. Auf dieser läuft ein Rad 40 mit einem aus Hartgummi gefertigten Reifen 42. Mit dem Rad 40 ist ein Zahnkranz 44 drehfest verbunden, der mit einem Zahnsegment 46 zusammenarbeitet. Letzteres ist vom freien Ende eines abgewinkelten Bremshebels 48 getragen, der auf einem vom Rahmen 36 getragenen Stift 50 gelagert ist. Der Bremshebel 48 hat einen Betätigungsarm 52, dessen kugeliges Ende einen Nockenfolgekörper 54 bildet, der in einem Nockenschlitz 56 läuft. Letzterer ist aus einem Betätigungsschieber 58 ausgefräst, der durch eine Führungsleiste 60, eine Führungsschraube 62 und ein Führungs-Langloch 64 in transversaler Richtung verschiebbar auf dem Rahmen 36 angebracht ist. Der Nockenschlitz 56 hat die in Figur 3 gezeigte Form, und unter ihm liegend ist die obere Wand des Rahmens 36 mit einer Öffnung 66 versehen, deren lichte Weite größer ist als der Hub des Nockenschlitzes 56. Der Betätigungsarm 52 des Bremshebels 48 ist durch die Öffnung 66 hindurchgeführt.

Wie aus Figur 2 ersichtlich, ist die Lage des Stiftes 50 so gewählt, daß der getriebene Arm 68 des Bremshebels 48 im wesentlichen tangential auf den Zahnkranz 44 zuläuft, wenn die durch Zahnkranz 44 und Zahnsegment 46 gebildete Bremse eingerückt ist.

Der Bremshebel 48 umfaßt noch einen dritten Hebelarm 70, der als Federsitz für eine Blattfeder 72 ausgebildet ist. Das andere Ende der Blattfeder 72 ist in einem rahmenfesten Federsitz 74 festgelegt, dessen Lage wiederum so gewählt ist, daß die Blattfeder 72 bei ausgerücktem Bremshebel 48 und eingerücktem Bremshebel 48 um gleiche Beträge aus einer mittleren, instabilen Lage in entgegengesetzter Richtung ausgelenkt ist.

Das in Figur 2 und 3 gezeigte Aufsetzelement überträgt dann keine Kräfte vom darunter liegenden Kettenförderer auf die Palette 10 wenn der Bremshebel 48 in der in Figur 2 gezeigten Ruhestellung steht. Das Aufsetzelement kann dann unbehindert über einen langsamer laufenden Kettenförderer hinwegrollen bzw. einen schneller laufenden Kettenförderer überholen lassen.

Um eine solche Relativbewegung zwischen Aufsetzelement und Kettenförderer unter geringer Kraft zu ermöglichen, haben die Kettenförderer quaderförmige Tragkappen 76, die auf die eigentliche Gliederkette aufgesetzt sind. Die Oberseiten der einelnen Tragkappen 76 bilden eine glatt durchgehende Förderfläche 78. Seitlich der Tragkappen 76 sind jeweils Wangenplatten 80, 82 vorgesehen, welche zusammen mit den Tragkappen 76 eine vollständige Kapselung der Gliederkette der Kettenförderer bilden. Die Wangenplatten 80, 82 können etwas über die Förderfläche 78 nach oben hochgezogen sein, so daß sie zugleich eine seitliche Führung für die Aufsetzelemente 22 bilden. Eine solche seitliche Führung ist für das Fördern der Paletten zwischen den einzelnen Arbeitsstationen ausreichend, da die Paletten in der Arbeitsstation selbst durch gesonderte Positioniermittel exakt zu den Werkzeugen ausgerichtet werden.

In Abwandlung des in Figur 3 gezeigten Ausführungsbeispieles kann man die Betätigungsschieber 58 der verschiedenen Aufsetzelemente durch parallel zur Förderrichtung verlaufende Stangen 84 und transversale Stangen 86 miteinander verbinden, so daß die Bremsen in Förderrichtung hintereinander liegender Aufsetzelemente gleichzeitig eingerückt bzw. ausgerückt werden und die Bremsen nebeneinanderliegender der Aufsetzelemente zwangsläufig im Gegentakt betätigt werden.

Bei dem in Figur 4 gezeigten abgewandelten Aufsetzelement ist ein Rad 88 um eine senkrecht auf der Förderfläche 78 stehende Achse drehbar auf einem transversal zur Förderrichtung bewegbaren Radträger angeordnet. Letzterer ist zwischen zwei seitlichen Führungsleisten 92, 94 geführt. Das Rad 88 sitzt auf einem großen Durchmesser aufweisenden Achsstummel 96, der mittels Schrauben 9B am Radträger 90 befestigt ist. Die in Figur 4 untenliegende Stirnfläche des Achsstummels 96 fluchtet mit der untenliegenden Stirnfläche des Rades 88.

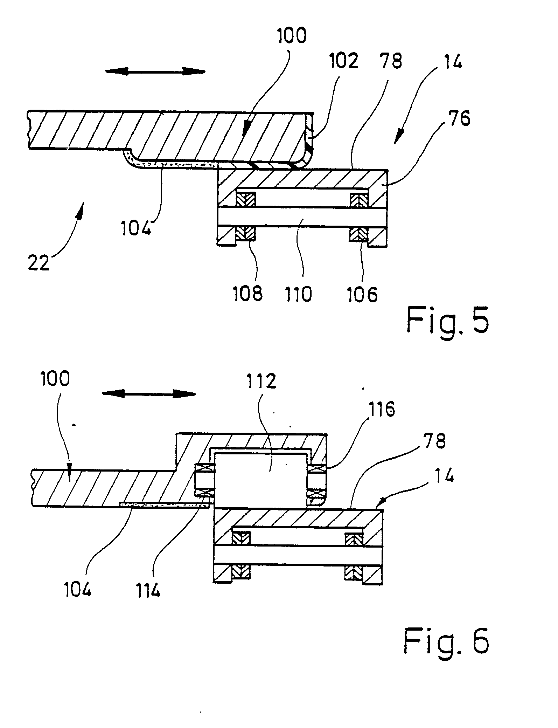

Steht der Radträger 90 in der in Figur 4 gezeigten Stellung, so läuft das Rad 88 unter bezogen auf die Förderrichtung des Kettenförderers geringfügigem transversalem Schlupf auf der Förderfläche 78. Bei dieser Radstellung wird vom Kettenförderer keine nennenswerte Kraft auf die Palette ausgeübt. Wird dagegen der Radträger 90 in Figur 4 nach rechts verschoben, bis das Rad 88 vollständig auf dem Kettenförderer liegt (gestrichelt eingezeichnet), so kann sich das Rad 88 nicht mehr drehen und wird im Reibschluß vom Kettenförderer mitgenommen. Unter diesen Bedingungen liegt somit einer hoher Reibschluß zwischen der Förderfläche 78 des betrachteten Kettenförderers (14) und der Palette 10 vor, und solange sie nicht auf ein Hindernis stößt, wird die Palette 10 mit dem Kettenförderer 14 mitbewegt, da bei der in Figur 4 gestrichelt wiedergegebenen Stellung des Rades 88 des Aufsetzelementes 22 das entsprechende Rad des Aufsetzelementes 26 nur mit dem Rande auf dem Kettenförderer 16 läuft, wobei im einzelnen eine zu Figur 4 spiegelbildliche Geometrie vorliegt. Es versteht sich, daß bei dem in Figur 4 gezeigten Aufsetzelementtyp die innenliegenden Wangenplatten 80 unterhalb der Förderfläche 78 enden. Sie berühren aber immer noch die innenliegenden Schenkel der Tragkappen 76 und gewährleisten so die Abdichtung der Gliederkette der Kettenförderer. Diese Bedingung muß auch bei den abgewandelten Aufsetzelementen nach den Figuren 5 und 6 erfüllt sein.

Zu dem in Figur 5 gezeigten Aufsetzelement gehört ein transversal zum Kettenförderer verschiebbarer Schuh 100, dessen Unterseite einen Belag niederer Reibung 102 sowie einen Belag hoher Reibung 104 trägt. Die Trennlinie zwischen diesen beiden Belägen verläuft parallel zur Förderrichtung. Die Oberflächen der beiden Beläge 102 und 104 gehen glatt und stoßfrei ineinander über, so daß der Schuh 100 ohne Anheben der Palette 10 aus der in Figur 5 gezeigten Gleitstellung nach rechts bewegt werden kann, um den Belag hoher Reibung 104 zunehmend auf die Förderfläch 78 zu bringen. Mit der Bewegung des Schuhs 100 nach rechts wird dann ein zunehmender Reibschluß zwischen der Förderfläche 78 und den Schuhen 100 und damit der Palette 10 hergestellt.

In Figur 5 sind zur Veranschaulichung des Innenaufbaus des Kettenförderers noch äußere Gelenklaschen 106, innere Gelenklaschen 108 und Gelenkstifte 110 der Gliederkette angedeutet.

Bei dem abgewandelten Aufsetzelement nach Figur 6 ist der Belag niederer Reibung 102 von Figur 5 durch eine Rulle 112 ersetzt, die um eine zur Förderrichtung senkrechte Achse drehbar in Lagern 114, 116 des Schuhes 100 gelagert ist. Die in Figur 6 tiefste Stelle der Rolle 112 fällt mit der Oberfläche des Belages mit hoher Reibung 104 zusammen.

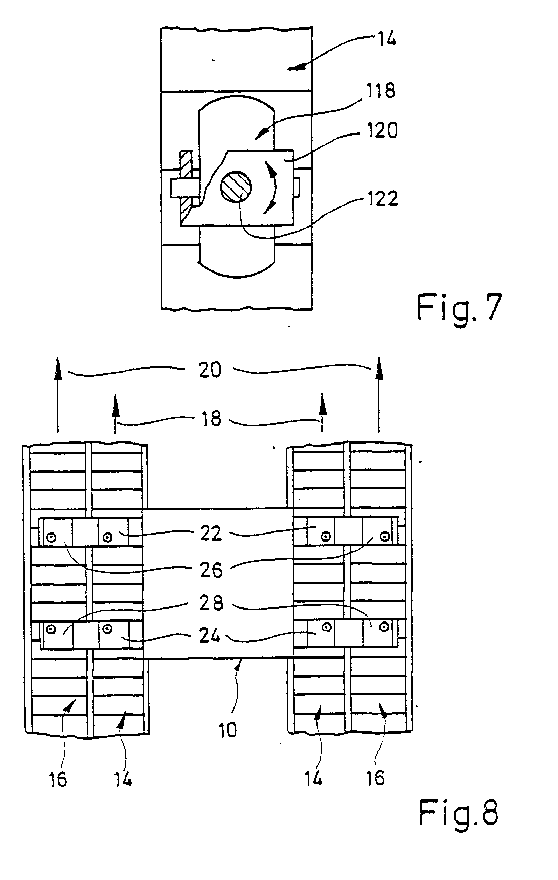

Auch bei dem in Figur 7 gezeigten weiter abgewandelten Aufsetzelement findet ein Rad 118 Verwendung, um eine kraftfreie Relativbewegung zwischen Kettenföderer und Aufsetzelement zu ermöglichen. Insoweit liegen ähnliche Verhältnisse vor wie beim Aufsetzelement nach Figur 2. Während dort aber zur Erzielung eines Reibschlusses zwischen Kettenförderer und Aufsetzelement das Rad 40 festgebremst wird, wird das Rad 118 des Aufsetzelementes nach Figur 7 zur Herbeiführung eines Reibschlusses um 90 Grad aus der in Figur 7 gezeigten Stellung herausgedreht, so daß die Radachse parallel zur Förderrichtung verläuft. Das Rad 118 kann dann nicht mehr rollen, und das Aufsetzelement wird von dem Kettenförderer mitgenommen.

Um diese Drehung des Rades 118 um eine senkrecht auf der Förderfläche 78 stehende Achse zu ermöglichen, ist das Rad in einem Lagerbügel 120 angeordnet, der eine vertikale Schwenkachse 122 trägt. Letztere ist im nicht näher gezeigten Rahmen des Aufsetzelementes gelagert und wird von einem nicht näher gezeigten Stellmotor gedreht. Bei Verwendung des in Figur 7 gezeigten Aufsetzelementes werden vorzugsweise zusätzlich Seiten-Führungsmittel für die Palette 10 verwendet, z.B. Rollenpaare, welche an den beiden Seitenfläche einer der Wangenplatten 80, 82 laufen.

Wie aus Figur 8 ersichtlich, kann man auch zwei Kettenförderer 14 mit niederer Geschwindigkeit und zwei Kettenförderer 16 mit hoher Geschwindigkeit vorsehen und entsprechend auch die Anzahl der Aufsetzelement 22 bis 28 verdoppeln. Man hat so symmetrische Kraftübertragungsbedingungen, d.h. Drehmomente auf die Palette 10 um deren Hochachse treten nicht auf.

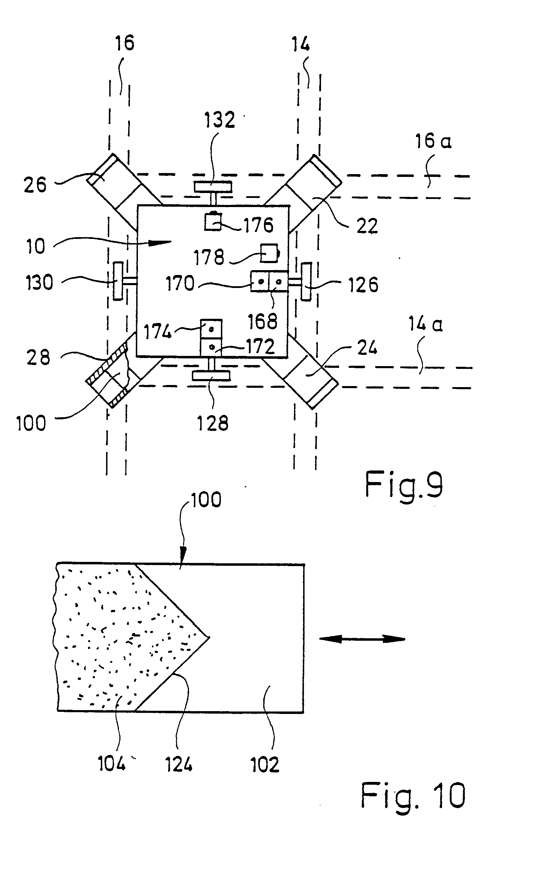

Figur 9 zeigt eine Kettenfördereranordnung mit Kettenförderern 14 und 16 ähnlich wie in Figur 1 sowie hierzu senkrecht verlaufenden Kettenförderern 14a und 16a. Die Palette 10 trägt nun die vier Aufsetzelemente 22 bis 28 in diagonaler Ausrichtung, wobei die einzelnen Aufsetzelemente ähnlichen Aufbau aufweisen wie in Figur 5 dargestellt. Wie aus Figur 10 ersichtlich, ist nun aber der Trennlinie 124 zwischen dem Belag niederer Reibung 102 und dem Belag hoher Reibung 104 unter rechtem Winkel abgeknickt, wobei sie symmetrisch zur Schuhlängsachse liegt. Damit kommen die beiden Teile der Trennlinie bei der diagonalen Anordnung der Aufsetzelemente nach Figur 9 ähnlich bezüglich der Kante der Kettenförderer zu liegen wie beim Ausführungsbeispiel nach Figur 5. Da auch die Verstellbewegung der Schuhe 100 in diagonaler Richtung verläuft, ist es zunächst für das Herstellen oder Aufheben des Reibschlusses unerheblich, ob die Palette 10 gerade auf den Kettenförderern 14 und 16 oder auf Kettenförderern 14a und 16a läuft. Allerdings müssen die Paare gemeinsam betätigter Aufsetzelemente für senkrecht zueinander verlaufende Abschnitte des Gesamtförderweges jeweils neu gebildet werden, da in jeweiliger Förderrichtung hintereinander liegende der Aufsetzelemente gemeinsam betätigt werden, die anderen im Gegentakt hierzu.

An den Seiten der Palette 10 sind ferner vier Zapfräder 126, 128, 130 und 132 angebracht, die jeweils paarweise ohne Gleiten auf den jeweils verwendeten Kettenförderern laufen. Da die Kettenförderer 14 und 16 auf jeden Fall mit unterschiedlicher Geschwindigkeit gefahren werden, wird zu jedem Zeitpunkt mindestens eines der Zapfräder angetrieben, und man kann so die zum Verstellen der Aufsetzelemente benötigte Kraft von der Bewegung eines der Kettenförderer ableiten, so daß die Palette 10 keine eigene Energiequelle mit sich zu tragen braucht und auch die stationären Steuermittel wie die Nockenschienen 30 und 32 nicht auf die Übertragung großer Kräfte ausgelegt zu werden brauchen.

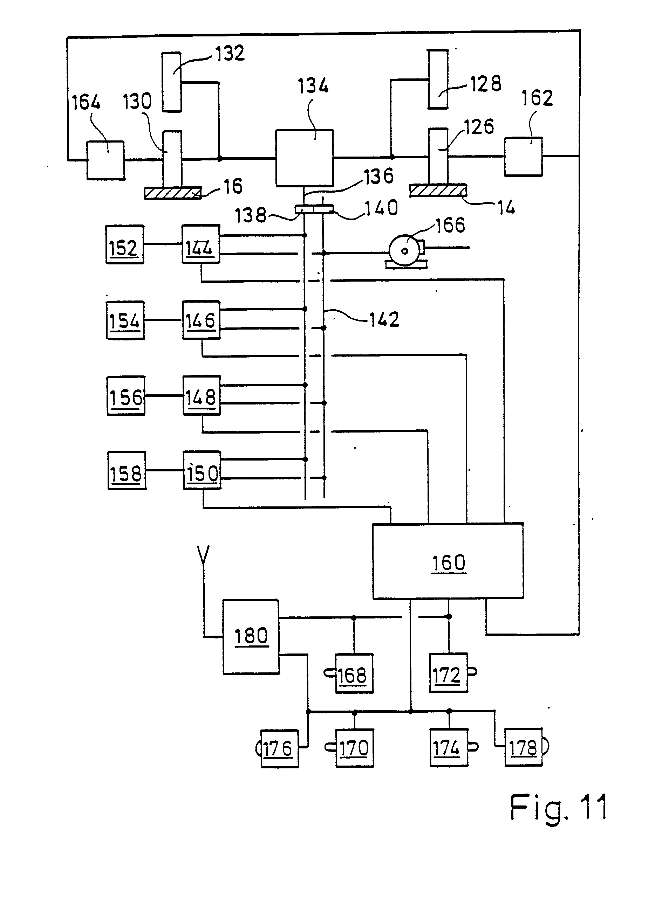

Zum soeben geschilderten Zwecke sind die Zapfräder 126, 128 mit einer der Eingangswellen eines Differentialgetriebes 134 verbunden, wie schematisch in Figur 11 angedeutet.

Die Zapfräder 130 und 132 sind mit der anderen Eingangswelle des Differentialgetriebes 134 verbunden.

Die Ausgangswelle 136 des Differentialgetriebes 134 treibt über ein Zahnradpaar 13B, 140 eine zweite Welle 142 an, die somit in entgegengesetztem Drehsinne umläuft. Die Wellen 136 und 142 sind über Umschaltkupplungen 144 bis 150 mit Stellgliedern 152 bis 158 der Aufsetzelemente 22 bis 28 verbunden. Die Ansteuerung der Umschaltkupplungen 144 bis 150 erfolgt von einer Steuereinheit 160 her, das Ganze derart, daß die Stellglieder 152 bis 158 gar nicht, in der einen oder der anderen Richtung verfahren werden.

Die Steuereinheit 160 erregt jeweils zwei der Umschaltkupplungen 144 bis 150 im gleichen Sinne. Hierzu muß die Steuereinheit 160 wissen, ob die gleich zu behandelnden Paare von Aufsetzelementen die Aufsetzelemente 22 und 24 sowie 26 und 28 oder die Paare 24 und 28 sowie 22 und 26 sind. Dies läßt sich dadurch ermitteln, daß man zwei einander gegenüberliegenden Zapfrädern, beim betrachteten Ausführungsbeispiel den Zapfrädern 126 und 130 Drehmelder 162. 164 zuordnen und deren Ausgangssignale zusammenfaßt. Wird dann ein kombiniertes Signal erhalten, so zeigt dies an, daß die Palette in Figur 9 in vertikaler Richtung verläuft; wird kein derartiges Signal erhalten, bewegt sich die Palette 10 in Figur 9 in horizontaler Richtung.

An die Welle 142 ist ferner ein kleiner Gleichstromgenerator 166 angeschlossen, der die zum Betreiben der Steuereinheit 160 notwendige elektrische Energie liefert.

In den Figuren 9 und 11 sind ferner Steuerfühler 168 bis 174 gezeigt, die mit rahmenfesten Betätigungsmitteln zusammenarbeiten. Bei den Steuerfühlern 168 bis 174 kann es sich entweder um mechanisch betätigte Schalter, Näherungsschalter oder optische Fühler handeln. Die Fühler 168 und 172 dienen dazu, die hohe Fördergeschwindigkeit einzustellen, wobei der Fühler 168 bei der Bewegung auf den Kettenförderern 14 und 16 aktiv ist und der Fühler 172 bei der Bewegung auf den Kettenförderern 14a und 16a zum Zuge kommt. Entsprechend dienen die Steuerfühler 170 und 174 zum Einstellen der kleinen Fördergeschwindigkeit in der vertikalen bzw. horizontalen Bewegungsrichtung von Figur 9.

Zusätzlich ist die Palette 10 mit Annäherungsfühlern 176, 178 bestückt, die beim betrachteten Ausführungsbeispiel gleich wirken wie die Steuerfühler 170, 174, also geringe Geschwindigkeit einstellen. Man kann die Annäherungsfühler 176, 178 aber auch mit einem gesonderten Eingang der Steuereinheit 160 verbinden und diese dann so auslegen, daß beim Anstehen eines Signales von den Annäherungsfühlern 176, 178 sämtliche Aufsetzelemente 22 bis 28 auf kleinen Kraftschluß zu den darunter liegenden Kettenförderern geschaltet werden, so daß die Kettenförderer unter der am Hindernis anstehenden Palette im wesentlichen unbehindert hindurchlaufen können.

Bei der Ansteuerung der Aufsetzelemente 22 bis 28 durch eine Steuereinheit 160, wie soeben beschrieben, ist es auch möglich, die Geschwindigkeitsänderungen der Palette 10 wegunabhängig nach Bedarf vorzugeben, indem man auf der Palette 10 einen Zweikanal-Empfänger 180 vorsieht. Dessen Ausgangssignale dienen dann ebenfalls der Einstellung der hohen oder niederen Fördergeschwindigkeit der Palette 10, und auf diese Weise kann man störungsbedingt entstandene Verdichtungen oder Verdünnungen in der Palettendichte rasch und einfach ausgleichen.

Die Steuereinheit 160 kann die Kupplungen 144 bis 150 auch gepulst betreiben, so daß das Verstellen der bewegbaren Teile der Aufsetzelemente 22 bis 28 in kleinen Schritten erfolgt. Auf diese Weise kann man bei Aufsetzelementen, wie sie in den Figuren 4 bis 6 und 10 gezeigt sind, das Ausmaß des Reibschlusses zwischen Aufsetzelement und Förderfläche quasi kontinuierlich ändern und so auch die Beschleunigungscharakteristik beim Übergang von der Bewegung mit der einen konstanten Geschwindigkeit zur Bewegung mit der anderen konstanten Geschwindigkeit vorgeben.

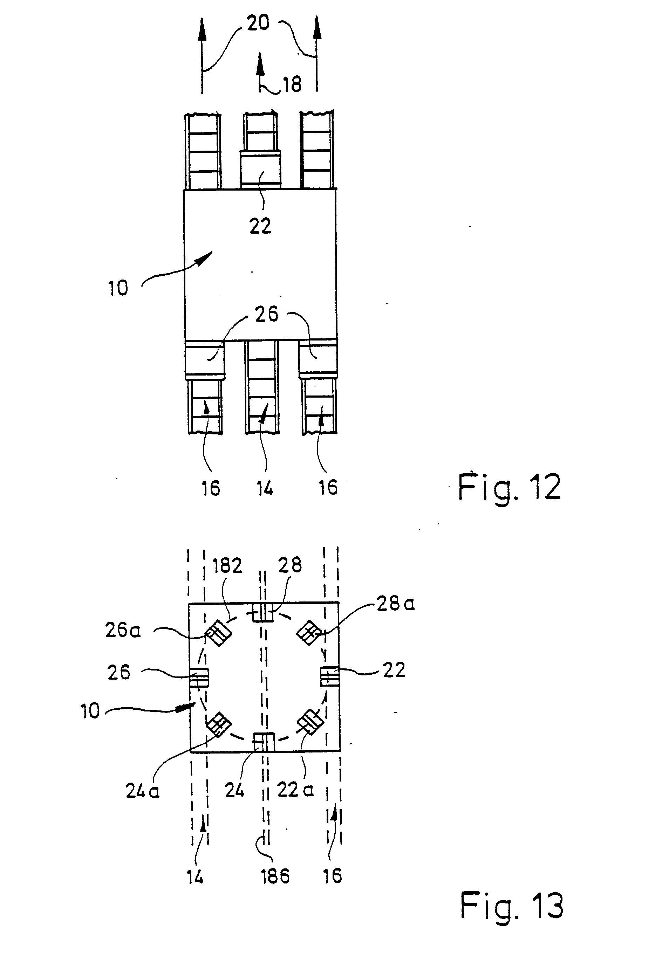

Figur 12 zeigt eine Aufsicht auf eine ähnliche Fördereinrichtung wie in Figur 8 gezeigt. Für die niedere Fördergeschwindigkeit ist jedoch nur ein einziger Kettenförderer 14 vorgesehen, während zum Fördern mit der hohen Geschwindigkeit zwei symmetrisch zum mittleren Kettenförderer angeordnete Kettenförderer 16 vorgesehen sind.

Bei den oben beschriebenen Ausführungsbeispielen von Paletten wurden die Aufsetzelemente nur der besseren Übersichtlichkeit halber außerhalb der Randkontur des Paletten-Hauptkörpers gezeichnet. Es versteht sich, daß die Aufsetzelemente in der Praxis innerhalb dieser Randkontur liegen, damit die Palette insgesamt eine glattflächige Begrenzung aufweist.

In Figur 13, die eine Aufsicht auf die Unterseite einer Palette darstellt, sind die Aufsetzelemente entsprechend angeordnet, wobei es sich wie bei der Palette nach Figur 9 um eine Palette handelt, die in zwei zueinander senkrechten Richtungen laufen kann, zusätzlich aber auch noch in einer um 45 Grad gegenüber der in Figur 13 gezeigten Lage verdrehten Stellung gefördert werden kann. Hierzu sind die verschiedenen Aufsetzelemente auf einem Teilkreis 182 angeordnet. Der den Seitenmitten zugeordnete Satz von Aufsetzelementen ist genauso bezeichnet wie in Figur 9; der um 45 Grad gedrehte, auf Diagonalen der quadratischen Palette 10 liegende Satz von Aufsetzelementen trägt zusätzlich den Buchstaben a.

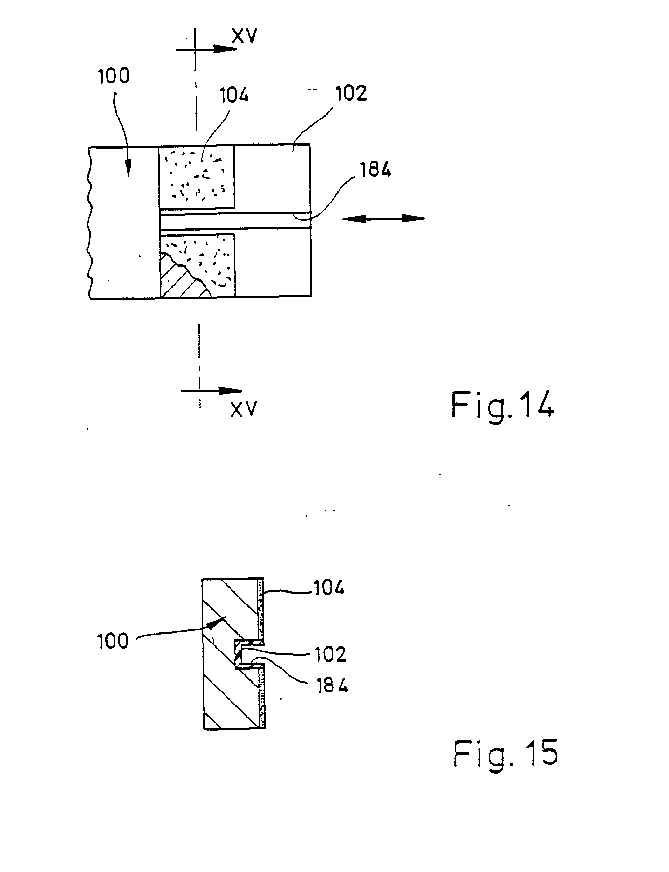

Wie aus den Figuren 14 und 15 ersichtlich, haben die Aufsetzelemente jeweils einen Schuh 100 mit einem Belag niederer Reibung 102 und einem Belag hoher Reibung 104. Zusätzlich ist aber auf den Schuhen 100 eine mittige, in Verstellrichtung laufende Nut 184 vorgesehen, die am Boden und an den Seitenwänden ebenfalls mit Material niederer Reibung belegt ist.

Im Betrieb laufen die bei der jeweiligen Förderrichtung seitlich gelegenen der Aufsetzelemente auf Kettenförderern 14 und 16, während die in Bewegungsrichtung gesehen vorderen und hinteren Aufsetzelemente mit ihrer mit Gleitmaterial belegten Nut 184 auf einer gegenüber der Förderfläche 78 erhöhten Stützschiene 186 laufen. Auf diese Weise erhält man eine kippfreie Abstützung der Palette 10 und gleichzeitig eine seitlich Führung derselben.

Man erkennt, daß die in Figur 13 gezeigte Palette nicht nur in der dortigen vertikalen Richtung sondern auch in horizontaler Richtung gleichermaßen laufen kann. Man kann auch die Palette um 45 Grad versetzt in vertikaler oder horizontaler Richtung laufen lassen.

Das Versetzen der Palette 10 um 45 oder 90 Grad oder vielfache oder Kombinationen dieser Winkel ist nicht nur im Hinblick auf das Fördern längs abgewinkelter Förderwege von Vorteil; zuweilen wird eine Palette in einer Bearbeitungsstation auch aus ihrer ursprünglichen Ausrichtung um 45 oder 90 Grad oder Kombinationen dieser Winkel herausgedreht, um eine bestimmte Oberfläche des Werkstückes einem Werkzeug gegenüberzustellen. Manchmal muß dieselbe Werkstückoberfläche in einer nachfolgenden Bearbeitungsstation wieder einem ähnlich angeordneten Werkzeug gegenübergestellt werden, so daß die Winkelumsetzung der Palette zweimal erfolgen muß. Bei der in Figur 13 gezeigten Ausführungsform kann man dagegen die Palette in dieser verdrehten Ausrichtung auf die Fördereinrichtung zurücksetzen und direkt so der nächsten Bearbeitungsstation zuführen, so daß zwei Paletten-Drehschritte entfallen können.

Bei den oben beschriebenen Ausführungsbeispielen erfolgte das Steuern des Kraftschlusses zwischen der Palette und den mit unterschiedlicher Geschwindigkeit laufenden Kettenförderern durch Steuern von Kupplungselementen, die auf der Palette angebracht waren. Die Kettenförderer folgten exakt dem gewünschten Förderweg.

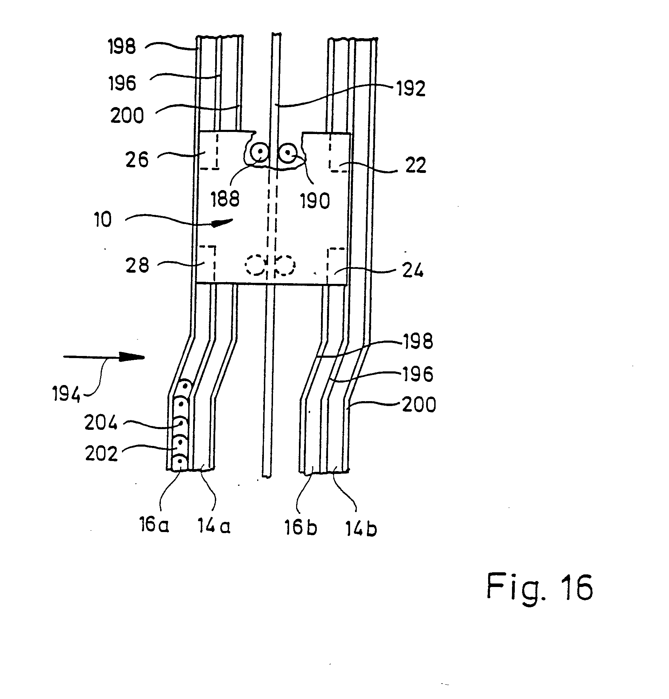

Man kann die Steuerung des Kraftschlusses zwischen Palette und Kettenförderern umgekehrt auch dadurch bewerkstelligen, daß man auf den Paletten feste Kupplungselemente vorsieht, die jeweils mit einem der Kettenförderer zusammenarbeiten, und die Kettenförderer an bestimmten Stellen des Förderweges transversal zur Förderrichtung so auslenkt, daß wahlweise der eine oder der andere Kettenförderer in Eingriff mit den Kupplungselementen der Palette kommt. Ein entsprechendes Ausführungsbeispiel ist in Figur 16 wiedergegeben.

Die Palette 10 ist am vorderen und hinteren Ende mit Paaren von Führungsrollen 188, 190 versehen, die an den Seitenflächen einer Führungsschiene 192 angreifen. Auf diese Weise ist die Palette 10 transversal zur Förderrichtung geführt.

Auf der Unterseite der Palette 10 sind vier Aufsetzelemente 22 bis 28 vorgesehen, die starr ausgebildet sind und über die die Palette in der in Figur 16 gezeigten Stellung auf Ketten 16a, 16b eines schnellen Kettenförderers aufruht. Ein langsamerer Kettenförderer besteht aus zwei Ketten 14a und 14b, welche in der in Figur 16 gezeigten Palettenstellung frei unter bzw. neben der Palette 10 laufen.

Bei einer durch einen Pfeil 194 markierten Stelle des Förderweges werden die Ketten 14a, 14b und 16a, 16b in transversaler Richtung derart versetzt, daß nun die langsam laufenderen Ketten 14a, 14b die gleiche transversale Lage erhalten wie zuvor die Ketten 16a und 16b. Beim Pfeil 194 laufen somit die Aufsetzelemente 22 bis 28 bei der in Figur 16 angegebenen Förderrichtung von den Ketten 14a, 14b auf die Ketten 16a, 16b, was bedeutet, daß die Palette 10 an dieser Stelle von der niederen Geschwindigkeit auf die hohe Geschwindigkeit beschleunigt wird.

Die einander benachbarten Kettenpaare 14a, 16a und 14b, 16b sind durch eine mittlere Führungsplatte 196 voneinander getrennt, deren Oberkante unter den Oberseiten der Ketten liegt. Die Außenseite der Ketten 16a, 16b ist jeweils durch eine Führungsplatte 198, die Außenseite der Ketten 14a, 14b durch eine Führungsplatte 200 geführt. Auch diese Führungsplatten haben eine unter der durch die Kettenförderer vorgegebenen Förderebene liegende Oberkante.

Um das transversale Versetzen einzelner Kettenabschnitte zu ermöglichen, bestehen die einzelnen Ketten aus Kettengliedern 202, welche um vertikale Achsen 204 verschwenkbar miteinander verbunden sind. Die Kettenglieder 202 haben im wesentlichen prismatische Gestalt, mit Ausnahme ihrer in Förderrichtung vorne bzw. hinten liegenden Stirnfläche, welche als zu den Achsen 204 koaxiale Zylinderflächen ausgebildet sind.

Das Ausführungsbeispiel nach Figur 16 eignet sich insbesondere für solche Anwendungsfälle, in denen nur eine geringe Anzahl von Geschwindigkeitsänderungen längs des Förderweges benötigt wird und eine sehr große Anzahl von Paletten im Umlauf ist. Die Paletten haben hier einen mechanisch besonders einfachen und robusten Aufbau.

**Patentansprüche**

1. Fördereinrichtung mit mindestens zwei parallel zueinander verlaufenden Endlosförderern (14, 16), die eine im wesentlichen geschlossene Förderfläche bilden, und mit Paletten (10), die über Aufsetzelemente (22 bis 28) auf den Endlosförderern (14, 16) aufliegen, wobei mindestens zwei der Endlosförderer (14, 16) mit unterschiedlicher Geschwindigkeit laufen und der Kraftschluß zwischen den Paletten (10) und den mit unterschiedlicher Geschwindigkeit laufenden Gruppen von Endlosförderern (14, 16) wegabhängig steuerbar ist, dadurch gekennzeichnet, daß die Steuerung des Kraftschlusses zwischen den Paletten (10) und den Endlosförderern (14, 16) durch Steuerung des Kraftschlusses zwischen den Aufsetzelementen (22 bis 28) der Paletten (10) und den Förderflächen (78) der Endlosförderer (14, 16) erfolgt, wobei diese Steuerung für alle mit einem der Endlosförderer (14, 16) zusammenarbeitenden Aufsetzelemente (22 bis 28) gemeinsam und für die verschiedenen Sätze der jeweils einem der Endlosförderer (14, 16) zugeordneten Aufsetzelemente (22 bis 28) im Gegentakt erfolgt.

2. Fördereinrichtung nach Anspruch 1, dadurch gekennzeichnet, daß die Aufsetzelemente (22 bis 28) jeweils Räder (40), die um eine zur Förderfläche (78) parallele und senkrecht auf der Förderrichtung stehende Achse (38) umlaufen, sowie auf diese Räder (40) arbeitende steuerbare Bremsen (44, 46) aufweisen.

3. Fördereinrichtung nach Anspruch 2, gekennzeichnet durch Mittel (72; 56, 54) zum elastischen und/oder reibschlüssigen Verriegeln der Bremsen (44, 46) in ihrer Arbeitsstellung und ihrer Ruhestellung.

4. Fördereinrichtung nach Anspruch 1, dadurch gekennzeichnet, daß die Aufsetzelemente (22 bis 28) jeweils Räder (88) aufweisen, die um eine senkrecht auf der Förderfläche (78) stehende Achse (96) umlaufen, und durch Stellmittel (90) zum Verschieben der Räder (88) in transversaler Richtung der Endlosförderer (14, 16).

5. Fördereinrichtung nach Anspruch 4, dadurch gekennzeichnet, daß die Räder (88) auf großen Durchmesser aufweisenden Achsstummeln (96) sitzen, deren untere Stirnfläche in der gleichen Ebene liegen wie die unteren Stirnflächen der Räder (88).

6. Fördereinrichtung nach Anspruch 1, dadurch gekennzeichnet, daß die Aufsetzelemente (22 bis 28) Schuhe (100) aufweisen, deren untere Stirnfläche nebeneinanderliegende Abschnitte hoher Reibung (104) und geringer Reibung 102) aufweisen.

7. Fördereinrichtung nach einem der Ansprüche 4 bis 6, dadurch gekennzeichnet, daß die Aufsetzelemente (22 bis 28) an den Ecken eines Quadrates angeordnet sind und in Richtungen verschiebbar sind, die um 45 Grad zu den Palettenachsen geneigt sind.

8. Fördereinrichtung nach Anspruch 7 in Verbindung mit Anspruch 6, dadurch gekennzeichnet, daß die Begrenzungslinie (124), die zwischen den Flächenabschnitten (102, 104) mit geringer und hoher Reibung liegt, rechtwinklig zueinander verlaufende Linienabschnitte hat, die jeweils parallel zu den Palettenachsen verlaufen.

9. Fördereinrichtung nach Anspruch 1, dadurch gekennzeichnet, daß die Aufsetzelemente (22 bis 28) einen untenliegenden Stirnflächenabschnitt (102) mit geringer Reibung auf der Förderfläche (78) und danebenliegend eine Rolle (112) aufweisen, deren Laufachse parallel zur Förderfläche (78) und senkrecht zur Förderrichtung verläuft.

10. Fördereinrichtung nach Anspruch 1, dadurch gekennzeichnet, daß die Aufsetzelemente (22 bis 28) jeweils ein Rad (118) aufweisen, dessen Laufachse in einer zur Förderfläche (78) parallelen Ebene senkrecht oder parallel zur Förderrichtung einstellbar ist.

11. Fördereinrichtung nach einem der Ansprüche 1 bis 10, dadurch gekennzeichnet, daß die Paletten 10 auf den Endlosförderern (14, 16) schlupffrei laufende seitliche Zapfräder (126 bis 132) aufweisen, die drehschlüssig mit zwei Eingängen eines Differentialgetriebes (134) verbunden sind, das seinerseits zwei gegenläufige Antriebswellen (136, 142) antreibt, die über steuerbare Kupplungen (144 bis 150) mit Stellmitteln (152 bis 158) verbunden sind, die auf die den Kraftschluß steuernden bewegbaren Teile der Aufsetzelemente (22 bis 28) arbeiten.

12. Fördereinrichtung nach Anspruch 11, dadurch gekennzeichnet, daß die Paletten (10) zusätzlich vordere und hintere Zapfräder (128, 132) aufweisen, die ebenfalls drehschlüssig mit den beiden Eingangswellen des Differential getriebes (134) verbunden sind. 13. Fördereinrichtung nach Anspruch 12, dadurch gekennzeichnet, daß Drehmelder (162, 164) mit zwei einander gegenüberliegenden der Zapfräder (126 bis 130) zusammenarbeiten und das zusammengefaßte Ausgangssignal dieser beiden Drehmelder zur Vorgabe derjenigen der Aufsetzelemente (22 bis 28) verwendet wird, die gemäß der jeweiligen Laufrichtung der Palette (10) gemeinsam zu betätigen sind.

14. Fördereinrichtung nach einem der Ansprüche 11 bis 13, gekennzeichnet durch einen vom Ausgang des Differentialgetriebes (134) angetriebenen Spannungsgenerator (166).

15. Fördereinrichtung nach einem der Ansprüche 1 bis 14, gekennzeichnet durch von den Paletten (10) getragene Steuerfühler (168 bis 174), die mit rahmenfesten Betätigungsmitteln zusammenarbeiten, um die Palette (10) an das langsamere Fördermittel (14) oder das schneller laufende Fördermittel (16) anzukoppeln.

16. Fördereinrichtung nach einem der Ansprüche 1 bis 15, gekennzeichnet durch Annäherungsfühler (176, 180), welche durch ihr Ansprechen zumindest den Kraftschluß zum schnelleren Endlosförderer (14, 16) aufheben, vorzugsweise den Kraftschluß der Palette zu allen der Endlosförderer aufheben.

17. Fördereinrichtung nach einem der Ansprüche 1 bis 16, gekennzeichnet durch drahtlos betätigte Steuerkreise (180) zum wahlweisen Herstellen eines Kraftschlusses zwischen der Palette (10) und dem langsameren Endlosförderer (14) bzw. dem schnelleren Endlosförderer (16).

18. Fördereinrichtung nach einem der Ansprüche 1 bis 17, dadurch gekennzeichnet, daß zwei Endlosförderer (16) höherer Geschwindigkeit seitlich außerhalb eines oder zweier Endlosförderer (14) mit kleiner Geschwindigkeit angeordnet sind.

19. Fördereinrichtung nach einem der Ansprüche 1 bis 18, dadurch gekennzeichnet, daß die Aufsetzelemente innerhalb der lichten Randkontur der Paletten (10) auf deren Unterseite angeordnet sind.

20. Fördereinrichtung nach Anspruch 19, dadurch gekennzeichnet, daß eine Vielzahl von Aufsetzelementen (22 bis 28), vorzugsweise vier oder ein ganzzahliges Vielfaches von vier, in Umfangsrichtung regelmäßig verteilt auf einem gemeinsamen Teilkreis (182) angeordnet sind.

21. Fördereinrichtung nach Anspruch 20, dadurch gekennzeichnet, daß Schuhe (100) der Aufsetzelemente (22 bis 28) jeweils eine Nut (184) auweisen, die in radialer Richtung des Teilkreises verläuft und unter geringer Reibung auf einer Stützschiene (186) gleitet.

22. Fördereinrichtung nach Anspruch 1, dadurch gekennzeichnet, daß die Paletten (10) feste Aufsetzelemente (22 bis 28) aufweisen und in zur Förderrichtung senkrechter Richtung fest geführt (188 bis 192) sind und daß die Endlosförderer (14, 16) bei vorgegebenen Stellen (194) des Förderweges derart zur durch die Paletten-Führungseinrichtung (188 bis 192) geneigt verlaufende Fördererabschnitte aufweisen, daß wahlweise der eine Endlosförderer oder der andere Endlosförderer mit der von den Aufsetzelementen (22 bis 2B) durchlaufenen Bahn fluchtet.

23. Fördereinrichtung nach Anspruch 22, dadurch gekennzeichnet, daß die Endlosförderer (14, 16) Förderketten (14a, 14b, 16a, 16b) aufweisen, die um zur Förderebene senkrechte Achsen (204) verschwenkare Förderelemente (202) aufweisen, die zumindest bei den vorgegebenen Stellen (194) des Förderweges zwischen an ihren Seitenflächen angreifenden Führungsplatten (196 bis 200) laufen.

24. Fördereinrichtung nach Anspruch 23, dadurch gekennzeichnet, daß die Förderelemente der Endlosförderer (14, 16) im wesentlichen quaderförmige Außenkontur haben, wobei aber ihre in Förderrichtung vorne bzw. hinten liegenden Stirnflächen als zu den Schwenkachsen koaxiale Zylinderflächen ausgebildet sind.

**Revendications**

1. Système de transport comportant deux transporteurs sans fin, (14, 16) au moins, disposés de manière parallèle l'un à l'autre et formant chacun une surface de transport substantiellement fermée, et des palettes (10) reposant sur les transporteurs sans fin (14, 16) par l'intermédiaire d'éléments d'appui (22 à 28), deux des transporteurs sans fin (14, 16) au moins fonctionnant à une vitesse différente et l'adhérence entre les palettes (10) et les groupes de transporteurs sans fin (14, 16) fonctionnant à une vitesse différente pouvant être commandée en fonction du parcours, caractérisé en ce que la commande de l'adhérence entre les palettes (10) et les transporteurs sans fin (14, 16) a lieu en commandant l'adhérence entre les éléments d'appui (22 à 28) des palettes (10) et les surfaces de transport (78) des transporteurs sans fin (14, 16), ladite commande se faisant de manière commune pour tous les éléments d'appui (22 à 28) associés à un des transporteurs sans fin (14, 16) et de façon symétriquement contraire pour les différentes séries d'éléments d'appui (22 à 28) associés chacune à un des autres transporteurs sans fin (14, 16).

2. Système de transport suivant la revendication 1, caractérisé en ce que chacun des éléments d'appui (22 à 28) présente une roue (40) tournant sur un axe (38) parallèle à la surface de transport (78) et perpendiculaire au sens de transport, ainsi qu'un frein (44, 46) pouvant être commandé de manière à agir sur ladite roue (40).

3. Système de transport suivant la revendication 2, caractérisé en ce qu'il comporte un moyen (72; 56, 54) pour verrouiller le frein (44, 46) élastiquement et/ou par friction, dans sa position de travail et dans sa position de repos.

4. Système de transport suivant la revendication 1, caractérisé en ce que chacun des éléments d'appui (22 à 28) présente une roue (88) tournant sur un axe (96) perpendiculaire à la surface de transport (78) et un moyen de commande (90) pour déplacer ladite roue (88) dans le sens transversal des transporteurs sans fin (14, 16).

5. Système de transport suivant la revendication 4, caractérisé en ce que les roues (88) sont montées sur des axes de grand diamètre (96), dont la face inférieure se situe dans le même plan que la face inférieure des roues (88).

6. Système de transport suivant la revendication 1, caractérisé en ce que chacun des éléments d'appui (22 à 28) présente un patin (100), dont la face inférieure présente une surface à faible frottement (102) et une surface à frottement élevé (104) disposées l'une à côté de l'autre.

7. Système de transport suivant une des revendications 4 à 6, caractérisé en ce que les éléments d'appui (22 à 28) sont disposés à chacun des coins d'un carré et peuvent être déplacés dans des directions formant un angle de 45 degrés avec les axes des palettes (10).

8. Système de transport suivant la revendication 7 en rapport avec la revendication 6, caractérisé en ce que la ligne de séparation (124) entre la surface à faible frottement (102) et la surface à frottement élevé (104) présente des tronçons formant un angle droit entre eux, lesquels sont chacun parallèles à un des axes des palettes (10).

9. Système de transport suivant la revendication 1, caractérisé en ce que chacun des éléments d'appui (22 à 28) présente une portion de surface inférieure à faible frottement (102) sur la surface de transport (78) et, à côté de celle-ci, un rouleau (112) dont l'axe est parallèle à la surface de transport (78) et perpendiculaire au sens de transport.

10. Système de transport suivant la revendication 1, caractérisé en ce que chacun des éléments d'appui (22 à 28) présente une roue (118), dont l'axe situé dans un plan parallèle à la surface de transport (78) peut être positionné perpendiculairement ou parallèlement au sens de transport.

11. Système de transport suivant une des revendications 1 à 10, caractérisé en ce que les palettes (10) présentent des roues de prise latérales (126 à 132) tournant sans patinage sur les transporteurs sans fin (14, 16), lesquelles sont directement reliées à deux arbres d'entrée d'un engrenage différentiel (134), lequel commande de son côté deux arbres d'entraînement (136, 142) tournant en sens contraire reliés, par l'intermédiaire d'accouplements (144 à 150) pouvant être commandés, à des moyens de positionnement (152 à 158) agissant sur les parties mobiles des éléments d'appui (22 à 28) commandant l'adhérence.

12. Système de transport suivant la revendication 11, caractérisé en ce que les palettes (10) possèdent encore des roues de prise avant et arrière (128, 132), lesquelles sont également directement reliées aux deux arbres d'entrée de l'engrenage différentiel (134).

13. Système de transport suivant la revendication 12, caractérisé en ce que des synchro-transmetteurs (162, 164) sont accouplés à deux des roues de prise (126 à 130) situées l'une en face de l'autre et en ce que le signal de sortie réuni de ces deux synchro-transmetteurs est utilisé pour définir lesquels des éléments d'appui (22 à 28) doivent être actionnés en commun, suivant le sens de déplacement des palettes (10).

14. Système de transport suivant une des revendications 11 à 13, caractérisé en ce qu'il comporte un générateur de tension (166) actionné par la sortie de l'engrenage différentiel (134).

15. Système de transport suivant une des revendications 1 à 14, caractérisé en ce que les palettes (10) sont pourvues de détecteurs (168 à 174) activés par des moyens de commande solidaires du châssis afin d'accoupler les palettes (10) avec le transporteur lent (14) ou avec le transporteur rapide (16).

16. Système de transport suivant une des revendications 1 à 15, caractérisé en ce qu'il est prévu des détecteurs de proximité (176, 178), lesquels suppriment de par leur activation au moins l'adhérence vis-à-vis du plus rapide des transporteurs sans fin (14, 16), de préférence l'adhérence des palettes vis-à-vis de tous les transporteurs sans fin.

17. Système de transport suivant une des revendications 1 à 16, caractérisé en ce qu'il est prévu des circuits de commande (180) commandés sans fil en vue d'obtenir une adhérence entre les palettes (10) et soit le transporteur lent (14), soit le transporteur rapide (16).

18. Système de transport suivant une des revendications 1 à 17, caractérisé en ce que deux transporteurs sans fin (16) de vitesse supérieure sont disposés latéralement à l'extérieur d'un ou de deux transporteurs sans fin (14) de vitesse inférieure.

19. Système de transport suivant une des revendications 1 à 18, caractérisé en ce que les éléments d'appui sont disposés à l'intérieur du bord périphérique libre des palettes (10), de leur côté inférieur.

20. Système de transport suivant la revendication 19, caractérisé en ce qu'une pluralité d'éléments d'appui (22 à 28), de préférence quatre ou un multiple entier de quatre, sont disposés sur un même cercle de référence (182) de façon régulièrement répartis dans le sens circonférentiel.

21. Système de transport suivant la revendication 20, caractérisé en ce que chacun des patins (100) des éléments d'appui (22 à 28) présente une rainure (184) orientée dans le sens radial du cercle de référence et coulissant selon un faible frottement sur un rail d'appui (186).

22. Système de transport suivant la revendication 1, caractérisé en ce que les palettes (10) présentent des éléments d'appui fixes (22 à 28) et sont guidées de manière non mobile (188 à 192) dans le sens perpendiculaire au sens de transport et en ce que les transporteurs sans fin (14, 16) présentent en des endroits prédéfinis (194) de la voie de transport, des tronçons en biais par rapport au système de guidage (188 à 192) des palettes (10), de telle sorte que l'un ou l'autre des transporteurs sans fin se trouve dans la trajectoire des éléments d'appui (22 à 28).

23. Système de transport suivant la revendication 22, caractérisé en ce que les transporteurs sans fin (14, 16) présentent des chaînes transporteuses (14a, 14b, 16a, 16b) comportant des éléments (202) pivotant autour d'axes (204) perpendiculaires au plan de transport, lesquels éléments coulissent entre des plaques de guidage (196 à 200) agissant sur leurs faces latérales, au moins aux endroits prédéfinis (194) de la voie de transport.

24. Système de transport suivant la revendication 23, caractérisé en ce que les éléments de transport (202) des transporteurs sans fin (14, 16) ont un contour substantiellement parallélipipèdique, leurs faces avant et arrière dans le sens de transport étant toutefois des surfaces cylindriques coaxiales aux axes de pivotement.

**Claims**

1. Conveying device with at least two endless conveyors (14, 16) extending parallel to each other, which form a substantially closed conveying surface and with pallets (10), which rest by support members (22 to 28) on the endless conveyors (14, 16), at least two of the endless conveyors (14, 16) travelling at different speeds and the frictional connection between the pallets (10) and the groups of endless conveyors (14, 16) travelling at different speeds being able to be controlled depending on the displacement, characterised in that the control of the frictional connection between the pallets (10) and the endless conveyors (14, 16) takes place by controlling the frictional connection between the support members (22 to 28) of the pallets (10) and the conveying surfaces (78) of the endless conveyors (14, 16), this control being common for all support members (22 to 28) co-operating with one of the endless conveyors (14, 16) and taking place in phase opposition for the various sets of support members (22 to 28) respectively associated with one of the endless conveyors (14, 16).

2. Conveying device according to Claim 1, characterised in that the support members (22 to 28) respectively comprise wheels (40), which rotate about an axle (38) parallel to the conveying surface (78) and perpendicular with respect to the conveying direction, as well as controllable brakes (44, 46) acting on these wheels (40).

3. Conveying device according to Claim 2, characterised by means (72; 56, 54) for the resilient and/or frictional locking of the brakes (44, 46) in their working position and their inoperative position.

4. Conveying device according to Claim 1, characterised in that the support members (22 to 28) respectively comprise wheels (88), which rotate about an axle (96) perpendicular to the conveying surface (78) and adjusting means (90) for shifting the wheels (88) in the transverse direction of the endless conveyors (14, 16).

5. Conveying device according to Claim 4, characterised in that the wheels (88) are seated on axle journals (96) having a large diameter, whereof the lower end faces lie in the same plane as the lower end faces of the wheels (88).

6. Conveying device according to Claim 1, characterised in that the support members (22 to 28) comprise shoes (100), whereof the lower end faces comprise adjacent high friction sections (104) and low friction sections (102).

7. Conveying device according to one of Claims 4 to 6, characterised in that the support members (22 to 28) are arranged at the corners of a square and are movable in directions which are inclined by 45° with respect to the axes of the pallets.

8. Conveying device according to Claim 7 in conjunction with Claim 6, characterised in that the boundary line (124), which lies between the low friction and high friction surface sections (102, 104), has line sections extending at right angles to each other, which respectively extend parallel to the axes of the pallets.

9. Conveying device according to Claim 1, characterised in that the support members (22 to 28) comprise a low friction underneath end face section (102) on the conveying surface (78) and lying adjacent thereto a roller (112), whereof the axle extends parallel to the conveying surface (78) and perpendicular to the conveying direction.

10. Conveying device according to Claim 1, characterised in that the support members (22 to 28) each comprise a wheel (118), whereof the axle is adjustable in a plane parallel to the conveying surface (78), perpendicularly or parallel to the conveying direction.

11. Conveying device according to one of Claims 1 to 10, characterised in that the pallets (10) comprise lateral power take-off wheels (126 to 132) travelling without slipping on the endless conveyors (14, 16), which wheels are rotationally connected to two inputs of differential gearing (134), which in turn drives two drive shafts (136, 142) moving in opposite directions, which are connected by way of controllable clutches (144 to 150) to adjusting means (152 to 158), which act on the movable parts of the support members (22 to 28) controlling the frictional connection.

12. Conveying device according to Claim 11, characterised in that the pallets (10) additionally comprise front and rear power take-off wheels (128, 132), which are likewise rotationally connected to the two input shafts of the differential gearing (134).

13. Conveying device according to Claim 12, characterised in that synchros (162, 164) cooperate with two opposing power take-off wheels (126 to 130) and the combined output signal of these two synchros is used to define that of the support members (22 to 28), which are to be actuated jointly according to the respective direction of travel of the pallet (10).

14. Conveying device according to one of Claims 11 to 13, characterised by a voltage generator (166) driven by the output of the differential gearing (134).

15. Conveying device according to one of Claims 1 to 14, characterised by control sensors (168 to 174) carried by the pallets (10), which cooperate with actuating means integral with the frame, in order to connect the pallet (10) to the slower conveying means (14) or to the faster conveying means (16).

16. Conveying device according to one of Claims 1 to 15, characterised by proximity sensors (176, 180), which by their response cancel at least the frictional connection to the faster of the endless conveyors (14, 16), preferably the frictional connection of the pallet to all the endless conveyors.

17. Conveying device according to one of Claims 1 to 16, characterised by control circuits (180) actuated by wireless for selectively producing a frictional connection between the pallet (10) and the slower endless conveyor (14) or the faster endless conveyor (16).

18. Conveying device according to one of Claims 1 to 17, characterised in that two higher speed endless conveyors (16) are located laterally outside one or two endless conveyors (14) running at low speed.

19. Conveying device according to one of Claims 1 to 18, characterised in that the support members are located within the inside marginal contour of the pallets (10), on their under side.

20. Conveying device according to Claim 19, characterised in that a plurality of support members (22 to 28), preferably four or a whole multiple of four, are arranged distributed uniformly in the peripheral direction on a common graduated circle (182).

21. Conveying device according to Claim 20, characterised in that shoes (100) of the support members (22 to 28) respectively comprise a groove (184), which extends in the radial direction of the graduated circle and slides with low friction on a support rail (186).

22. Conveying device according to Claim 1, characterised in that the pallets (10) comprise fixed support members (22 to 28) and are guided in a fixed manner in the direction perpendicular to the conveying direction (188 to 192) and that at given points (194) of the conveying path, the endless conveyors (14, 16) comprise conveying sections extending in an inclined manner due to the pallet guide device (188 to 192) such that optionally one of the endless conveyors or the other endless conveyor aligns with the path travelled by the support members (22 to 28).

23. Conveying device according to Claim 22, characterised in that the endless conveyors (14, 16) comprise conveying chains (14a, 14b, 16a, 16b), which comprise conveying members (202) able to tilt about pins (204) perpendicular to the conveying plane, which at least at the given points (194) of the conveying path travel between guide plates (196 to 200) engaging their side faces.

24. Conveying device according to Claim 23, characterised in that the conveying members of the endless conveyors (14, 16) have a substantially cuboid-shaped outer contour, but their end faces lying at the front or rear in the conveying direction being constructed as cylindrical surfaces coaxial to the tilting axes.

Fig. 1

Fig.2

Fig. 3

Fig.4

Fig. 5

Fig. 6

Fig. 7

Fig.8

Fig.9

Fig. 10

Fig. 11

Fig. 12

Fig. 13

7

Fig.14

Fig. 15

Fig. 16